# EUROPEAN PATENT SPECIFICATION

(11) **EP 2 834 893 B1**
(45) Date of publication and mention of the grant of the patent: **01.07.2020**
(21) Application number: 13705221.3
(22) Date of filing: 11.01.2013
(51) Int. Cl.: H02G 3/04

(54) **CABLE GUIDE APPARATUS, CABLE CONTAINMENT SYSTEM AND METHOD**
KABELFÜHRUNGSVORRICHTUNG, KABELHALTESYSTEM UND -VERFAHREN
APPAREIL PASSE-CÂBLE, SYSTÈME ET PROCÉDÉ DE CONFINEMENT DE CÂBLE

(30) Priority: 23.01.2012 GB 201201031; 01.03.2012 GB 201203637
(43) Date of publication of application: 11.02.2015
(73) Proprietor: Barrett, Dale James, Kidlington Oxfordshire OX5 2DZ (GB); Woodhams, Colin, Begbroke, Oxfordshire OX5 1RP (GB)
(72) Inventor: Barrett, Dale, Kidlington, Oxfordshire OX5 2DZ (GB); Woodhams, Colin, Begbroke, Oxfordshire OX5 1RP (GB); Padmore, David, Stratton Audley, Oxforshire OX27 9AA (GB)
(74) Representative: Hocking, Adrian Niall
(86) International application number: PCT/GB2013/050042
(87) International publication number: WO 2013/110921

(56) References cited:
- EP-A2- 0 893 865
- WO-A1-95/19652
- FR-A1- 2 727 186
- JP-A- 2004 320 969
- US-A- 3 082 984
- US-B1- 6 364 255

## Description

The present invention relates to solid-lidless cable guide apparatus, to a cable containment system utilising such apparatus, and to a method of surface mounting electrical cabling using the apparatus.

Trunking and other cable guides are well known, but all require a uniformly solid lid to close off the interior channel and thereby retain the cables inside. This increases materials and installation costs. Furthermore, elbow connectors are required to neatly guide the cables around corners. To draw a cable end out of the channel, an access opening has to be cut into the channel wall by the installer, leading to increased installation time and in many cases a rough-looking and unprofessional finish. Examples of similar cable guide inventions are disclosed by US 6364255 B1, US 3082984 A, EP 0893865 A2, WO 95/19652 A1, JP 2004320969 A and FR 2727186 A1. Furthermore, trunking is typically plastics and thus cannot be utilised at some installation sites. Notably, a fire-alarm cabling installation which may be exposed to severe heat or other environmental conditions must meet British Standard requirement BS5839. This requires that all fire-alarm cabling is mounted using metal brackets and fastenings to prevent or limit the possibility of drooping or dropping. As such, it is often the case that separate mounting brackets with suitable fasteners are used spaced apart along the mounting surface, such as a wall or ceiling. The fire-alarm cable or bundle of cables is then strung between the brackets. This installation procedure is inevitably excessively time consuming.

The present invention seeks to provide a solution to these problems.

According to the first aspect of the invention, there is provided a cable guide apparatus according to claim 1 comprising an elongate strip-like backplate having a plurality of spaced-apart apertures therealong, and a coverless two-part framework mounted to the backplate, the framework comprising a base frame element formed of a plurality of fixedly mounted lateral support elements in the form of inverted hoops, a closure frame element formed of a plurality of arcuate hoops, corresponding pairs of the inverted hoops and arcuate hoops forming hooped support elements, a plurality of the said hooped support elements extending laterally across the backplate and spaced apart longitudinally along the backplate, and each of the base frame element and closure frame element comprising a plurality of elongate struts interconnecting the hooped support elements, the elongate struts being spaced apart along a longitudinal extent of the hooped support elements and a longitudinal extent of the elongate struts matching or substantially matching a longitudinal extent of the backplate, the said apertures being offset relative to the hooped support elements and the elongate struts, wherein the closure frame element having a longitudinal and lateral extent which matches or substantially matches that of the base frame element, and further comprising at least one retaining clip for releasably retaining the closure frame element in a closed condition, and the closure frame element being hingably connected to the base frame element along a longitudinal side thereof.

Preferably, a longitudinal extent of each hooped support element may have a flat or substantially flat base portion, parallel or substantially parallel side wall portions, and a curved upper portion interconnecting the two side wall portions.

Preferably, each hooped support element may be substantially D-shaped.

Preferably the framework may include a base frame element mounted on the backplate. Preferably, each hooped support element may overlap the backplate.

Preferably, the elongate struts may be spaced apart to enable unhindered or substantially unhindered perpendicular access to the apertures in the backplate.

Preferably, the elongate struts may be spaced from an apex of each support element. Preferably, two further elongate struts may be provided at or adjacent to longitudinal edges of the base of the backplate.

Preferably, the hooped support elements and/or the elongate struts may be at least one of rods and wires.

Preferably, a lateral extent of said apparatus may be at least in part arcuate.

Preferably, the backplate may have a front surface and a rear surface, the said rear surface may have a plurality of further elongate struts being spaced apart along a lateral extent of the backplate, for spacing the backplate away from a mounting surface.

Preferably, the closure frame element may be removable.

According to a second aspect of the invention, there is provided a cable containment system for the guiding of electrical cabling requiring metal fastenings, the system comprising one or more lengths of cable guide apparatus in accordance with the first aspect of the invention and a plurality of metal fastenings for receipt in two or more said apertures of the apparatus.

According to a third aspect of the invention, there is provided a method of surface mounting electrical cabling using cable guide apparatus in accordance with the first aspect of the invention, the method comprising the steps of: a] engaging a plurality of fasteners in two or more of said apertures of the cable guide apparatus in a mounting surface; b] feeding an electrical cable through the hooped support elements; c] drawing an end of the electrical cable out of the framework at a required position.

Preferably, the electrical cable may be fire-alarm cable.

The present invention will now be more particularly described, by way of example only, with reference to the accompanying drawings, in which:
Figure 1 shows a top plan view of an example of cable guide apparatus, not covered by the invention;
Figure 2 shows a lateral side view from one end of the cable guide apparatus, taken along line A-A in Figure 1;
Figure 3 shows a longitudinal side view of the cable guide apparatus, taken along line B-B in Figure 1;
Figure 4 shows a bottom plan view of the cable guide apparatus;
Figure 5 shows a lateral side view of an embodiment of cable guide apparatus, in accordance with the first aspect of the invention;
Figure 6 shows a longitudinal side view of part of the cable guide apparatus of Figure 5, in a first lateral direction;
Figure 7 shows a longitudinal side view of part of the cable guide apparatus of Figure 5, in a second lateral direction which is opposite the first lateral direction.

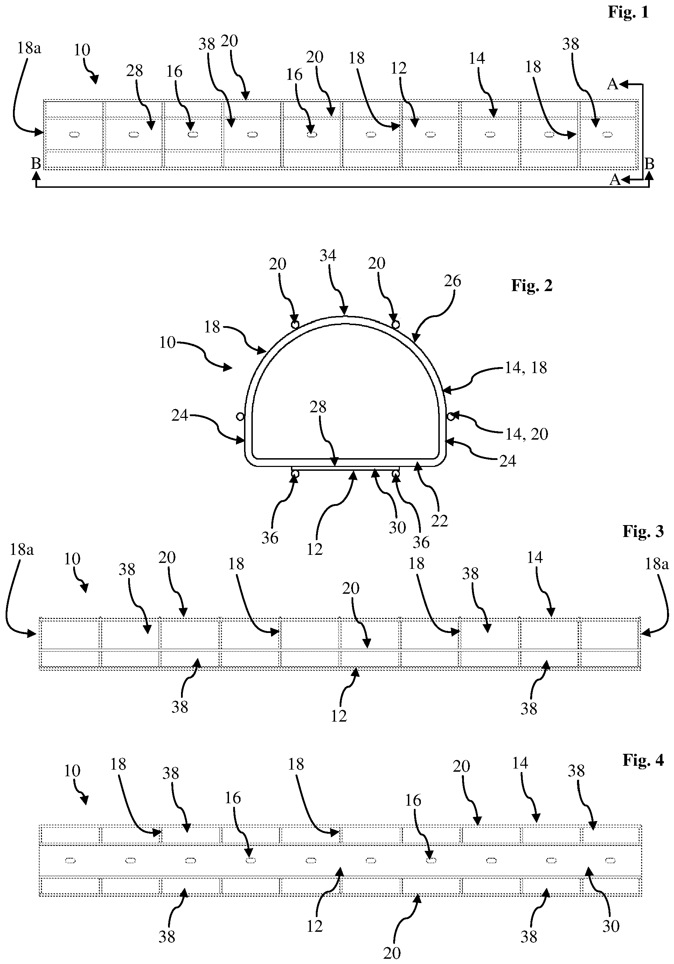

Referring firstly to Figures 1 to 4 of the drawings, there is shown lidless cable guide apparatus 10 which comprises a backplate 12 and a coverless unitary open framework 14. The backplate 12 is preferably formed of metal, and is an elongate strip-like planar or substantially planar element providing a mounting base for the framework 14. The backplate 12 is also uniformly continuous or unbroken along its longitudinal extent except for a plurality of equi-spaced apertures 16 extending along or substantially along the longitudinal centre line or axis of symmetry of the backplate 12.

Each aperture 16 is preferably slightly elongate, allowing a fixing or fastener to be received therethrough with some tolerance allowing longitudinal adjustment of the apparatus 10 when mounted. In this case, the apparatus 10 is preferably 3 metres long, and ten apertures 16 are equally spaced apart along the backplate 12. Other lengths can be envisaged as necessity dictates, and fewer or more apertures 16 may be provided, as required. Lengths of the apparatus 10 may be cut to length by an installer as required. The coverless framework 14 is adapted to not receive an engagable lid or cover, and comprises a plurality of spaced apart hooped support elements 18 and a plurality of elongate struts 20 which interconnect the hooped support elements 18. Each hooped support element 18 is mounted laterally across the backplate 12. A hooped support element 18 is preferably provided at each lateral end of the backplate 12 to prevent or limit the chance of an installer catching himself or herself on an irregular protruding portion of the apparatus 10, and the remaining hooped support elements 18 are equi-spaced apart therebetween. In this example, and beneficially, each hooped support element 18 is positioned partway and preferably midway between consecutive apertures 16.

Each hooped support element 18 is preferably continuous or endless, and includes a straight or substantially straight back portion 22, parallel or substantially parallel side wall portions 24, and a convexly arcuate or curved upper portion 26 which interconnects the two side wall portions 24. In this way, each hooped support element 18 is substantially D-shaped. Corners between the back portion 22 and the side wall portions 24 are preferably rounded to limit the possibility of injuring an installer. Although other shapes can be considered, the convexly arcuate upper portion 26 is beneficial in enabling access for an installer's hands and in particular digits. A square shape of hooped support element 18 is feasible, but inherently a central point of the interior becomes further away as the corners are neared, and this may cause difficulties, especially in awkward positions, for an installer to securely grasp a cable therewithin. An installer is also more likely to catch themselves on edges of a square-shaped hooped support element, leading to an increased likelihood of injury.

The hooped support elements 18 may be attached to the backplate 12 via welding or any other suitable fastening means.

Preferably, the hooped support elements 18 are connected to a front surface 28 of the backplate 12. However, it is feasible that the hooped support elements 18 can be connected to the rear surface 30 of the backplate 12. In either case, the back portion 22 of each hooped support element 18 overlaps the longitudinal edges 32 of the backplate 12, thereby allowing a greater interior volume for feeding cable therealong.

The elongate struts 20 are preferably formed of a similar material to that of the hooped support elements 18, and in this case it is convenient to use metal rod or heavy gauge wire. However, in certain situations, plastics can be considered.

The elongate struts 20 extend in parallel or substantially parallel with each along the longitudinal extent of the apparatus 10, terminating at the hooped support elements 18a at the ends of the backplate 12. The elongate struts 20 are also laterally spaced apart from each other, preferably being equally or substantially equally spaced apart around the side wall portions 24 and the upper portion 26 of the hooped support elements 18. Preferably, the elongate struts 20 are spaced away from an apex 34 of each hooped support element 18, and more preferably being spaced apart by the or substantially the lateral extent of the backplate 12. This therefore provides unhindered or substantially unhindered perpendicular access to the backplate 12 and thus the apertures 16 therein.

To assist with rigidity, in this example at least two further elongate struts 36 are provided at or adjacent to longitudinal edges 32 of the rear surface 30 of the backplate 12. The further elongate struts 20 are also beneficial in spacing the backplate 12 slightly away from a mounting surface, thereby enabling fastener holes in the mounting surface to be more easily observed and located and also allowing improved ventilation to prevent or limit moisture retention between the surfaces.

Due to the D-shaped hooped support elements 18 and the open framework 14, a uniformly solid cover or lid is not engagable therewith and as such is not required.

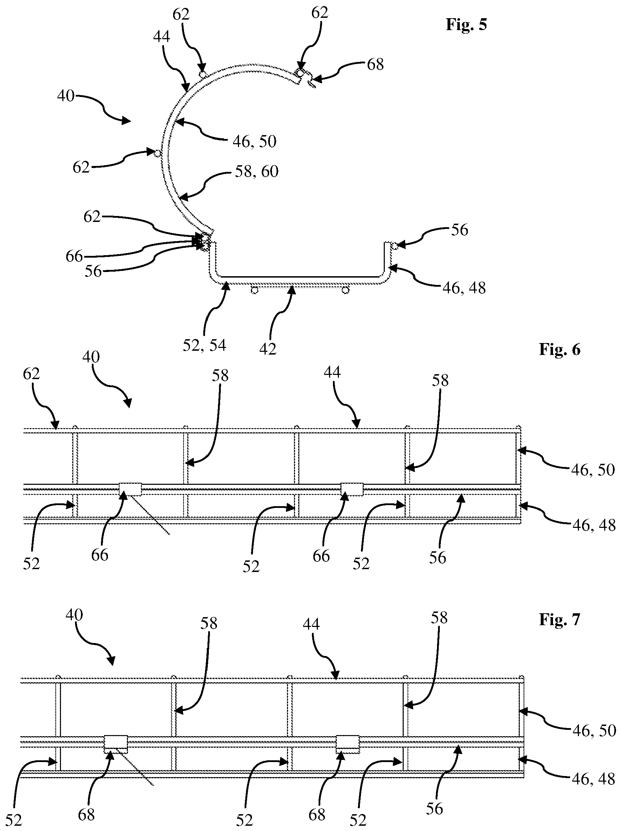

Referring now to Figures 5 to 7, an embodiment of cable guide apparatus 40 is shown. In this case, the cable guide apparatus 40 comprises a backplate 42, similar to that of the first embodiment, and a coverless open rigid or substantially rigid framework 44. The framework 44 forms a two part housing 46 having a base frame element 48 and a closure frame element 50 with matching or substantially matching lateral and longitudinal extents.

The base frame element 48 is formed of a plurality of spaced-apart lateral support elements 52 in the form of inverted hoops 54, and a plurality of first elongate struts 56 which interconnect the inverted hoops 54.

The closure frame element is also formed of a plurality of spaced-apart lateral support elements 58 in this case in the form of arcuate hoops 60, and a plurality of second elongate struts 62 which interconnect the arcuate hoops 60.

Each inverted hoop 54 is fixedly mounted laterally across the backplate 42 to support the first elongate struts 56.

As in the first example, a plurality of equi-spaced apertures is provided which extend along or substantially along the longitudinal centre line or axis of symmetry of the backplate 42. Each aperture is preferably slightly elongate, allowing a fixing or fastener to be received therethrough with some tolerance allowing longitudinal adjustment of the apparatus 40 when mounted.

Each inverted hoop 54 is preferably positioned partway and preferably midway between consecutive backplate apertures.

The closure frame element 50 is pivotably fastened to the base frame element 48, in this case via hinges 66. The hinges 66 may be sprung to bias the closure frame element 50 either to a closed position or an open position. The benefit with the former is that, should the closure frame element 50 unintentionally open, it is likely to remain in a substantially closed condition thereby preventing or limiting cables therein from falling out. In the latter case, having the closure frame element 50 biased to an open condition allows an installer to utilise both hands whilst installing cabling without having to hold the closure frame element 50 open.

The hinges 66 are provided in spaced apart relationship along one longitudinal side of the apparatus 40. Conveniently, the hinges 66 interconnect neighbouring first and second elongate struts 56, 62 of the base frame element 48 and the closure frame element 50.

To releasably fasten the closure frame element 50 in its closed condition, one or more retaining clips 68 are provided along a longitudinal side of the apparatus 40 which is opposite the hinges 66. To impart a positive engagement, the retaining clips 68 are preferably spring-biased.

Although the lateral extent of the closure frame element 50 is preferably part-circular and in this case semi-circular, other non-circular shapes can be envisaged. However, a benefit with an arcuate lateral extent is that corners are substantially dispensed with, thereby reducing the likelihood of injury to an installer.

The lateral extent of the base frame element 48 is preferably substantially U-shaped. However, again, other shapes may be envisaged as being more convenient. For example, the base frame element could be part-circular or semi-circular.

A further benefit of including a hingable closure frame element is that the closure frame element can be more easily sectioned and removed by an installer to allow passage through a narrow gap.

When provided with suitable surface-engagement fastening devices, such as masonry or plasterboard screws or bolts and rawl plugs, the solid-lidless cable guide apparatus 10, 40 forms at least part of a solid-coverless cable containment system. To use the system, the mounting surface is suitably prepared and the backplate 12, 42 of the apparatus 10, 40 is offered up to the pre-drilled holes in the mounting surface. Connection of the backplate 12, 42 to the mounting surface is made via the appropriate fasteners being inserted into two or more of the apertures 16, and received in their respective holes in the mounting surface. In the case of fire-alarm cabling, all components including the fasteners are metal in order to meet BS5839.

With the backplate 12, 42 fixed in place, the framework 14, 44 projects from the mounting surface. The required electrical cable or cables can thus be fed either through a hooped support element 18a at one end of the apparatus 10 or through an opening 38 defined by the longitudinal elongate struts 20 and neighbouring hooped support elements 18 partway along the longitudinal extent of the framework 14. The cable or cables is/are then drawn through the interior of the framework 14 until a required exit point is reached, either being the hooped support element 18 at the other end of the apparatus 10 or another opening 38 in the framework 14 partway therealong. In the case of the apparatus 40, the hingable closure frame element 50 can be opened to allow insertion either from one end of the apparatus 40 or via an opening in the base frame element or the closure frame element.

The framework is sufficiently open to enable an installer to easily reach in with at least their fingers to draw the cable or cables along.

The lateral support elements prevent or limit the or each cable from drooping or dropping, and also prevent or limit the requirement for cable-tying or bundling groups of electric cables together.

Although a longitudinal extent of the cable guide apparatus is preferably straight or rectilinear, curved longitudinal extents can be provided.

Although the closure frame element of the second embodiment of the apparatus is hinged, it may additionally be removable to simplify cable insertion in certain circumstances.

The solid-lidless cable guide apparatus therefore provides a significantly more cost-effective solution to the problem of running electrical cabling on interior surfaces when full out-of-sight covering is not required. The cable guide apparatus can also be conveniently utilised within wall cavities, especially when embedding cabling in insulation, thereby allowing simple and effective guiding of the cabling in horizontal and/or vertical directions as required without being impeded or hindered by the insulation or other in-cavity items. The cable guide apparatus and associated cable containment system also meets the requirements for fire-alarm cabling by providing metal support and fixings whilst also reducing cost and installation time. Corner connectors can also be dispensed with, since the open framework provides convenient access openings allowing the or each cable to transition between two frameworks at right angles or other angles to each other.

The embodiment described above is provided by way of example only, and various other modifications will be apparent to persons skilled in the field without departing from the scope of the invention as defined by the appended claims.

## Claims

1. Cable guide apparatus (40) comprising an elongate strip-like backplate (42) having a plurality of spaced-apart apertures therealong, and a coverless two-part framework (44) mounted to the backplate (42), the framework (44) comprising a base frame element (48) formed of a plurality of fixedly mounted lateral support elements (52) in the form of inverted hoops (54), a closure frame element (50) formed of a plurality of arcuate hoops (60), corresponding pairs of the inverted hoops (54) and arcuate hoops (60) forming hooped support elements, a plurality of the said hooped support elements (54, 60) extending laterally across the backplate (42) and spaced apart longitudinally along the backplate (42), and each of the base frame element (48) and closure frame element (50) comprising a plurality of elongate struts (56, 62) interconnecting the hooped support elements, the elongate struts (56, 62) being spaced apart along a longitudinal extent of the hooped support elements and a longitudinal extent of the elongate struts (56, 62) matching or substantially matching a longitudinal extent of the backplate (42), the said apertures being offset relative to the hooped support elements (54, 60) and the elongate struts (56, 62), wherein the closure frame element (50) has a longitudinal and lateral extent which matches or substantially matches that of the base frame element (48), and further comprising at least one retaining clip (68) for releasably retaining the closure frame element (50) in a closed condition, and the closure frame element (50) being hingably connected to the base frame element (48) along a longitudinal side thereof.

2. Cable guide apparatus (40) as claimed in claim 1, wherein a longitudinal extent of each hooped support element has a flat or substantially flat base portion, parallel or substantially parallel side wall portions, and a curved upper portion interconnecting the two side wall portions.

3. Cable guide apparatus (40) as claimed in any one of the preceding claims, wherein the base frame element (48) is mounted on the backplate (42).

4. Cable guide apparatus (40) as claimed in any one of the preceding claims, wherein each hooped support element overlaps the backplate (42).

5. Cable guide apparatus (40) as claimed in any one of the preceding claims, wherein the elongate struts (62) are spaced apart to enable unhindered or substantially unhindered perpendicular access to the apertures in the backplate (42).

6. Cable guide apparatus (40) as claimed in any one of the preceding claims, wherein the elongate struts (56, 62) are spaced from an apex of each support element (54, 60).

7. Cable guide apparatus (40) as claimed in any one of the preceding claims, wherein two further elongate struts (56) are provided at or adjacent to longitudinal edges of the base of the backplate (42).

8. Cable guide apparatus (40) as claimed in any one of the preceding claims, wherein the backplate (42) has a front surface and a rear surface, the said rear surface having a plurality of further elongate struts being spaced apart along a lateral extent of the backplate (42), for spacing the backplate (42) away from a mounting surface.

9. Cable guide apparatus (40) as claimed in any one of the preceding claims, wherein the closure frame element (50) is removable.

10. A cable containment system for the guiding of electrical cabling requiring metal fastenings, the system comprising one or more lengths of cable guide apparatus (40) as claimed in any one of the preceding claims and a plurality of metal fastenings for receipt in two or more said apertures of the apparatus (40).

11. A method of surface mounting electrical cabling using cable guide apparatus (40) as claimed in any one of claims 1 to 9, the method comprising the steps of: a] engaging a plurality of fasteners in two or more of said apertures of the cable guide apparatus (40) in a mounting surface; b] feeding an electrical cable through the hooped support elements; and c] drawing an end of the electrical cable out of the framework (44) at a required position.

12. A method as claimed in claim 11, wherein the electrical cable is fire-alarm cable.

## Patentansprüche

1. Kabelführungsvorrichtung (40), umfassend eine längliche streifenartige Rückplatte (42) mit einer Vielzahl von zueinander beabstandeten Öffnungen längs dieser und ein abdeckungsloses zweiteiliges Gerüst (44), das an der Rückplatte (42) montiert ist, wobei das Gerüst (44) ein Basisrahmenelement (48), das aus einer Vielzahl von fest montierten seitlichen Stützelementen (52) in der Form von umgekehrten Ringen (54) gebildet ist, ein Verschlussrahmenelement (50), das aus mehreren bogenförmigen Ringen (60) gebildet ist, umfasst, wobei entsprechende Paare der umgekehrten Ringe (54) und bogenförmigen Ringe (60) die Ringstützelemente bilden, wobei sich eine Vielzahl der Ringstützelemente (54, 60) seitlich über die Rückplatte (42) erstreckt und in Längsrichtung entlang der Rückplatte (42) zueinander beabstandet ist, und jedes von Grundrahmenelement (48) und Verschlussrahmenelement (50) eine Vielzahl von länglichen Streben (56, 62) umfasst, die die Ringstützelemente miteinander verbinden, wobei die länglichen Streben (56, 62) entlang einer Längsausdehnung der Ringstützelemente zueinander beabstandet sind und eine Längsausdehnung der länglichen Streben (56, 62) die mit einer Längsausdehnung der Rückplatte (42) übereinstimmen oder im Wesentlichen übereinstimmen, wobei die Öffnungen relativ zu den Ringstützelementen (54, 60) und den länglichen Streben (56, 62) versetzt sind, wobei das Verschlussrahmenelement (50) eine Längs- und Querausdehnung aufweist, die mit der des Basisrahmenelements (48) übereinstimmt oder im Wesentlichen übereinstimmt, und ferner umfassend mindestens einen Halteclip (68) zum lösbaren Halten des Verschlussrahmenelements (50) in einem geschlossenen Zustand, und das Verschlussrahmenelement (50) entlang einer Längsseite davon schwenkbar mit dem Grundrahmenelement (48) verbunden ist.

2. Kabelführungsvorrichtung (40) nach Anspruch 1, wobei eine Längsausdehnung jedes Ringstützelements einen flachen oder im Wesentlichen flachen Basisabschnitt, parallele oder im Wesentlichen parallele Seitenwandabschnitte und einen gekrümmten oberen Abschnitt, der die beiden Seitenwandabschnitte miteinander verbindet, aufweist.

3. Kabelführungsvorrichtung (40) nach einem der vorhergehenden Ansprüche, wobei das Basisrahmenelement (48) auf der Rückplatte (42) montiert ist.

4. Kabelführungsvorrichtung (40) nach einem der vorhergehenden Ansprüche, wobei jedes Ringstützelement mit der Rückplatte (42) überlappt.

5. Kabelführungsvorrichtung (40) nach einem der vorhergehenden Ansprüche, wobei die länglichen Streben (62) zueinander beabstandet sind, um einen ungehinderten oder im Wesentlichen ungehinderten senkrechten Zugang zu den Öffnungen in der Rückplatte (42) zu ermöglichen.

6. Kabelführungsvorrichtung (40) nach einem der vorhergehenden Ansprüche, wobei die länglichen Streben (56, 62) von einem Scheitelpunkt jedes Stützelements (54, 60) beabstandet sind.

7. Kabelführungsvorrichtung (40) nach einem der vorhergehenden Ansprüche, wobei zwei weitere längliche Streben (56) an oder neben den Längskanten der Basis der Rückplatte (42) vorgesehen sind.

8. Kabelführungsvorrichtung (40) nach einem der vorhergehenden Ansprüche, wobei die Rückplatte (42) eine Vorderfläche und eine Rückfläche aufweist, wobei die Rückfläche eine Vielzahl von weiteren länglichen Streben aufweist, die entlang einer seitlichen Ausdehnung der Rückplatte (42) zueinander beabstandet sind, um die Rückplatte (42) von einer Montagefläche weg zu beabstanden.

9. Kabelführungsvorrichtung (40) nach einem der vorhergehenden Ansprüche, wobei das Verschlussrahmenelement (50) entfernbar ist.

10. Kabeleinhausungssystem zum Führen von Stromkabeln, die Metallbefestigungen erfordern, wobei das System eine oder mehrere Längen von Kabelführungsvorrichtungen (40) nach einem der vorhergehenden Ansprüche und eine Vielzahl von Metallbefestigungen zur Aufnahme in zwei oder mehr Öffnungen der Vorrichtung (40) umfasst.

11. Verfahren zur Oberflächenmontage von Stromkabeln unter Verwendung einer Kabelführungsvorrichtung (40) nach einem der Ansprüche 1 bis 9, wobei das Verfahren die Schritte umfasst zum: a] Bringen einer Vielzahl von Befestigungselementen in Eingriff mit zwei oder mehr der Öffnungen der Kabelführungsvorrichtung (40) in einer Montagefläche; b) Führen eines Stromkabels durch die Ringstützelemente; und c) Ziehen eines Endes des Stromkabels aus dem Rahmen (44) an eine erforderliche Position.

12. Verfahren nach Anspruch 11, wobei das Stromkabel ein Brandmeldekabel ist.

## Revendications

1. Appareil de guidage de câbles (40) comprenant une plaque arrière allongée en forme de bande (42) ayant une pluralité d'ouvertures espacées le long de celle-ci, et un cadre sans couvercle en deux parties (44) monté sur la plaque arrière (42), le cadre (44) comprenant un élément de cadre de base (48) formé d'une pluralité d'éléments de support latéraux montés de manière fixe (52) sous la forme d'arceaux inversés (54), un élément de cadre de fermeture (50) formé d'une pluralité d'arceaux arqués (60), des paires correspondantes des arceaux inversés (54) et des arceaux arqués (60) formant des éléments de support en arceaux, une pluralité desdits éléments de support en arceaux (54, 60) s'étendant latéralement en travers de la plaque arrière (42) et espacés longitudinalement le long de la plaque arrière (42), et chacun de l'élément de cadre de base (48) et de l'élément de cadre de fermeture (50) comprenant une pluralité d'entretoises allongées (56, 62) reliant les éléments de support en arceaux, les entretoises allongées (56, 62) étant espacées le long d'une étendue longitudinale des éléments de support en arceaux et d'une étendue longitudinale des entretoises allongées (56, 62) correspondant ou correspondant sensiblement à une étendue longitudinale de la plaque arrière (42), lesdites ouvertures étant décalées par rapport aux éléments de support en arceaux (54, 60) et aux entretoises allongées (56, 62), dans lequel l'élément de cadre de fermeture (50) présente une étendue longitudinale et latérale qui correspond ou correspond sensiblement à celle de l'élément de cadre de base (48), et comprenant en outre au moins un clip de retenue (68) pour maintenir de manière amovible l'élément de cadre de fermeture (50) à l'état fermé, et l'élément de cadre de fermeture (50) étant relié de manière articulée à l'élément de cadre de base (48) le long d'un côté longitudinal de celui-ci.

2. Appareil de guidage de câbles (40) selon la revendication 1, dans lequel une étendue longitudinale de chaque élément de support en arceau a une partie de base plate ou sensiblement plate, des parties de parois latérales parallèles ou sensiblement parallèles, et une partie supérieure incurvée reliant les deux parties de parois latérales.

3. Appareil de guidage de câbles (40) selon l'une quelconque des revendications précédentes, dans lequel l'élément de cadre de base (48) est monté sur la plaque arrière (42).

4. Appareil de guidage de câbles (40) selon l'une quelconque des revendications précédentes, dans lequel chaque élément de support en arceau chevauche la plaque arrière (42).

5. Appareil de guidage de câbles (40) selon l'une quelconque des revendications précédentes, dans lequel les entretoises allongées (62) sont espacées pour permettre un accès perpendiculaire sans entrave ou sensiblement sans entrave aux ouvertures dans la plaque arrière (42).

6. Appareil de guidage de câbles (40) selon l'une quelconque des revendications précédentes, dans lequel les entretoises allongées (56, 62) sont espacées à partir d'un sommet de chaque élément de support (54, 60).

7. Appareil de guidage de câbles (40) selon l'une quelconque des revendications précédentes, dans lequel deux autres entretoises allongées (56) sont prévues au niveau ou à proximité des bords longitudinaux de la base de la plaque arrière (42).

8. Appareil de guidage de câbles (40) selon l'une quelconque des revendications précédentes, dans lequel la plaque arrière (42) présente une surface avant et une surface arrière, ladite surface arrière ayant une pluralité d'autres entretoises allongées espacées le long d'une étendue latérale de la plaque arrière (42), pour espacer la plaque arrière (42) d'une surface de montage.

9. Appareil de guidage de câbles (40) selon l'une quelconque des revendications précédentes, dans lequel l'élément de cadre de fermeture (50) est amovible.

10. Système de confinement de câbles pour le guidage de câbles électriques nécessitant des fixations métalliques, le système comprenant une ou plusieurs longueurs d'appareil de guidage de câbles (40) selon l'une quelconque des revendications précédentes et une pluralité de fixations métalliques reçues dans deux ou plusieurs desdites ouvertures de l'appareil (40).

11. Procédé de montage en surface de câblage électrique à l'aide d'un appareil de guidage de câbles (40) selon l'une quelconque des revendications 1 à 9, le procédé comprenant les étapes de : a] mise en prise d'une pluralité de fixations dans deux ou plusieurs desdites ouvertures de l'appareil de guidage de câbles (40) dans une surface de montage ; b] passage d'un câble électrique à travers les éléments de support en arceaux ; et c] tirage d'une extrémité du câble électrique hors du cadre (44) au niveau d'une position requise.

12. Procédé selon la revendication 11, dans lequel le câble électrique est un câble d'alarme incendie.
